# EUROPEAN PATENT SPECIFICATION

(11) **EP 2 952 041 B1**
(45) Date of publication and mention of the grant of the patent: **28.11.2018**
(21) Application number: 14773675.5
(22) Date of filing: 12.03.2014
(51) Int. Cl.: G06Q 20/32, H04L 12/58

(54) **VERIFYING A USER IDENTITY USING LOCATION**
ÜBERPRÜFUNG EINER BENUTZERIDENTITÄT ANHAND DES STANDORTS
VÉRIFICATION D'UNE IDENTITÉ D'UTILISATEUR AU MOYEN D'UN EMPLACEMENT

(30) Priority: 14.03.2013 US 201361782421 P
(43) Date of publication of application: 09.12.2015
(73) Proprietor: Telcom Ventures, LLC, Miami, FL 33131-2398 (US)
(72) Inventor: SINGH, Rajendra, Indian Creek Village, Florida 33154 (US)
(74) Representative: Yeadon IP Limited
(86) International application number: PCT/US2014/024133
(87) International publication number: WO 2014/159548

(56) References cited:
- WO-A1-00/35216
- WO-A1-2012/052787
- WO-A1-2013/163326
- US-A- 5 243 652
- US-A1- 2003 169 881
- US-A1- 2006 046 746
- US-A1- 2007 055 785
- US-A1- 2010 175 001
- US-A1- 2011 179 064
- US-B2- 7 500 607

## Description

### FIELD

The present disclosure relates to wireless communications systems, methods, and devices and, more particularly, to systems, methods, and devices that use a user location.

### BACKGROUND

Locations (e.g., positions) of wireless electronic devices may be determined using various techniques. For example, a User Equipment (UE) may determine its location using an integrated Global Positioning System (GPS) receiver. Accordingly, it may be possible to determine where a user of the UE is currently located, and/or where the user has previously been located, by tracking the location of the UE. It is known from prior art, e.g. patent documents US 2007/055785 A1 and US 5 243 652 A, the use of tracking a mobile device location for providing increased security on information access at the mobile device.

### SUMMARY

The invention is defined in the independent claims. Additional features of the invention are provided in the dependent claims. The embodiments and/or examples disclosed in the following description which are not covered by the appended claims are considered as not being part of the present invention.

### BRIEF DESCRIPTION OF THE DRAWINGS

Figure 1 is a schematic diagram illustrating a geographical area that includes a user device, according to various embodiments described herein.
Figures 2-7 are flowcharts illustrating operations for verifying a user identity and/or enabling/disabling an action, using a current and/or previous user location, according to various embodiments described herein.

### DETAILED DESCRIPTION

Example embodiments of the present inventive concepts now will be described with reference to the accompanying drawings. The present inventive concepts may, however, be embodied in a variety of different forms and should not be construed as limited to the embodiments set forth herein. Rather, these embodiments are provided so that this disclosure will be thorough and complete, and will fully convey the scope of the present inventive concepts to those skilled in the art. In the drawings, like designations refer to like elements. It will be understood that when an element is referred to as being "connected," "coupled," or "responsive" to another element, it can be directly connected, coupled or responsive to the other element or intervening elements may be present. Furthermore, "connected," "coupled," or "responsive" as used herein may include wirelessly connected, coupled or responsive.

The terminology used herein is for the purpose of describing particular embodiments of the present inventive concepts only and is not intended to be limiting of the present inventive concepts. As used herein, the singular forms "a," "an," and "the" are intended to include the plural forms as well, unless expressly stated otherwise. It will be further understood that the terms "includes," "comprises," "including," and/or "comprising," when used in this specification, specify the presence of stated features, steps, operations, elements, and/or components, but do not preclude the presence or addition of one or more other features, steps, operations, elements, components, and/or groups thereof. As used herein, the term "and/or" includes any and all combinations of one or more of the associated listed items. The symbol "/" is also used as a shorthand notation for "and/or."

Unless otherwise defined, all terms (including technical and scientific terms) used herein have the same meaning as commonly understood by one of ordinary skill in the art to which the present inventive concepts belong. It will be further understood that terms, such as those defined in commonly used dictionaries, should be interpreted as having a meaning that is consistent with their meaning in the context of the relevant art and the present disclosure, and will not be interpreted in an idealized or overly formal sense unless expressly so defined herein.

It will be understood that although the terms "first" and "second" may be used herein to describe various elements, these elements should not be limited by these terms. These terms are only used to distinguish one element from another element. Thus, a first element could be termed a second element, and similarly, a second element may be termed a first element without departing from the teachings of the present inventive concepts.

Operations provided herein describe enabling/disabling an action (e.g., a message or a purchase), and/or establishing/verifying an identity, using a current user device location and/or a previous user device location. For example, a message may be broadcast to a large group but received only by individuals at a particular location (e.g., the third floor of a building). In another example, use of a credit/debit card may be conditioned upon whether a user device has previously been (or has not previously been) at a particular location. In a further example, use of a user device to make a purchase may be conditioned upon whether the user device has previously been (or has not previously been) at a particular location. In yet another example, decryption of encrypted information may require knowledge of the location of the intended recipient.

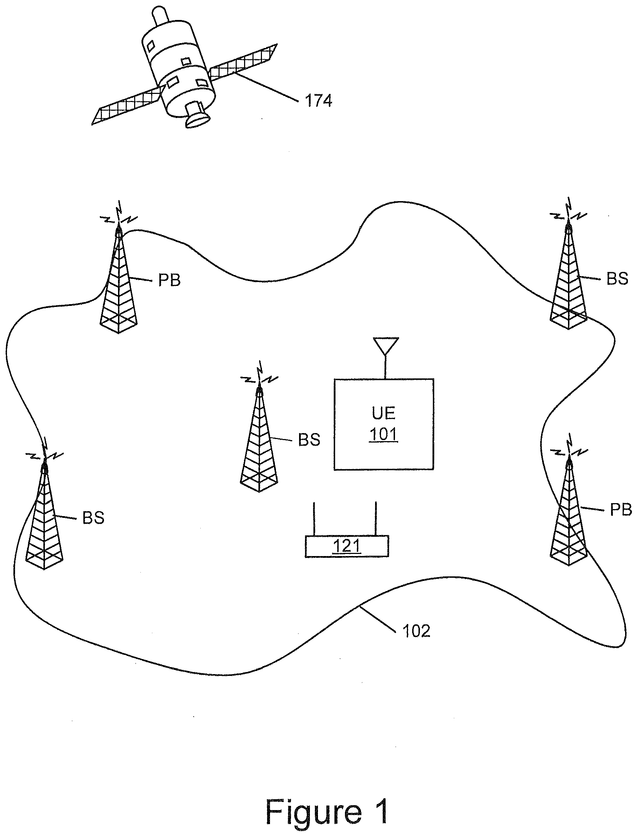

Referring now to Figure 1, a UE 101 is illustrated in a geographical area 102. The UE 101 may be (or may be a part of) one of various types of wireless electronic user devices (including mobile/cell phones, as well as wireless user devices without phone capabilities). The UE 101 can be located anywhere inside the geographical area 102. Although Figure 1 illustrates a single UE 101, a plurality of UEs 101 may be located inside the geographical area 102. In some embodiments, hundreds, thousands, or more UEs 101 may be located inside the geographical area 102.

The UE 101 may wirelessly receive signals from transmitters such as a Base Station (BS)(e.g., a cellular BS) and/or from a Positioning Beacon (PB) of a Terrestrial Beacon Network (TBN). It will be understood that the geographical area 102 may include any number of (e.g., three, four, dozens, or more) BSs and/or PBs. Moreover, the UE 101 may receive signals from a Wi-Fi hot spot 121 in the geographical area 102 and/or a GPS network 174. Accordingly, it will be understood that the location (e.g., position) of the UE 101 may be determined using signals to/from the BSs, PBs, the Wi-Fi hot spot 121, and/or the GPS network 174.

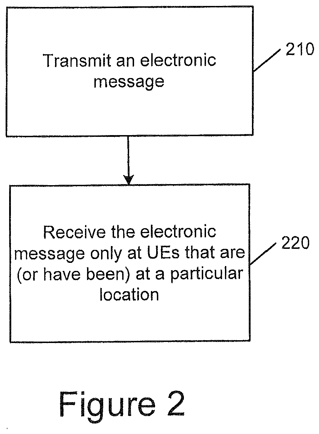

In various embodiments of the present inventive concepts, an action may be enabled or disabled using the current location of a UE 101 or using a previous location (which may be determined using a history of user locations) of the UE 101. As an example, referring now to Figure 2, a flowchart is provided that illustrates operations of enabling or disabling receipt of an electronic message. For example, for a team of detectives working on a case, information (e.g., in one of various types of electronic messages) may be transmitted/broadcast (Block 210) to the entire police force, but only received (Block 220) by the team (via their UEs 101) that is (or has been) at a particular location pertaining to the investigation. Moreover, the receipt (Block 220) of the information may be further restricted to a sub-team that is working (or has been working) on the case on the third floor of a particular building. Each UE 101 may be configured to collect such information, which can be stored at an Authorizing Server (AS) that can ensure that the broadcast information is only received by the sub-team of the police force that is working (or has been working) on the case. Accordingly, receipt of the information may be blocked for members of the police force outside of a particular team or sub-team. Such information may optionally be further protected by a password. Various embodiments of the present inventive concepts may thus provide operations of relatively simple distribution of information, combined with selective use/receipt of the information.

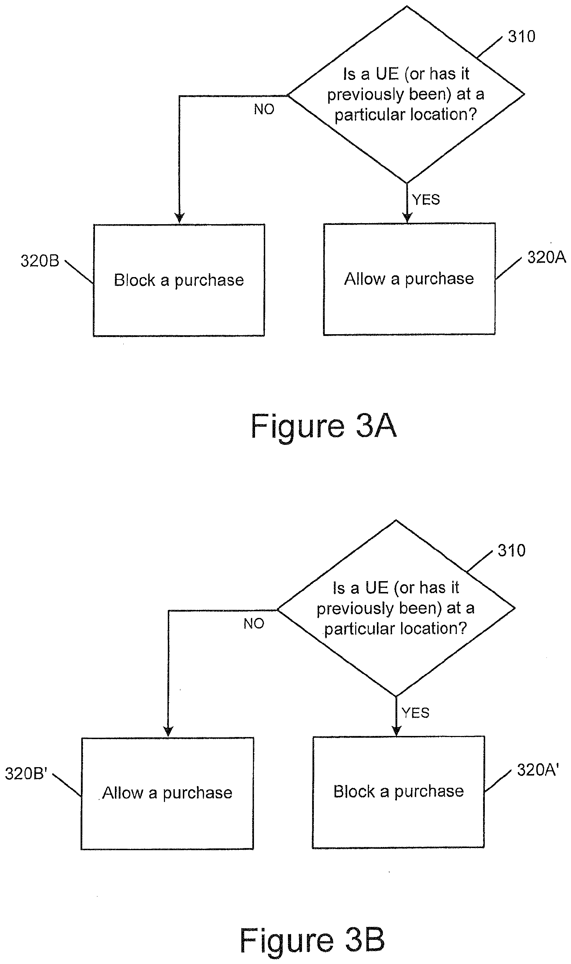

Referring now to Figures 3A and 3B, in another example of various embodiments of the present inventive concepts, use of a credit/debit card (Block 320) may be conditioned upon whether a user device has previously been (or has not previously been) at a particular location (which is distinct from being conditioned upon the contemporaneous/current location of the user device at the point of sale)(Block 310). For example, a parent may give a credit card or debit card to a teenager to purchase an item at a school or a bookstore. Various embodiments of the present inventive concepts may use the current location of the teenager's UE 101 to allow (Block 320A) the purchase of the item at the school (or at a business near the school) or at the bookstore. Additionally or alternatively, one or more purchases may be disallowed (e.g., disabled) based on a current or previous location of the teenager's UE 101. For example, the purchase of a movie ticket by a credit card (and/or a digital wallet used by the UE 101) may be disallowed (Block 320B) if the teenager has not been at a certain location (such as a school) that day (or in another timeframe). On the other hand, the purchase of the movie ticket may be allowed (Block 320A) if the teenager has been at the location that day. In another example, the use of a debit card may be disallowed (Block 320A') at an Automated Teller Machine (ATM) that is near a liquor store (or other location). Such disablements of financial transactions using the current location or a previous location of the UE 101 may prevent/reduce impulse purchases of undesirable items by the teenager.

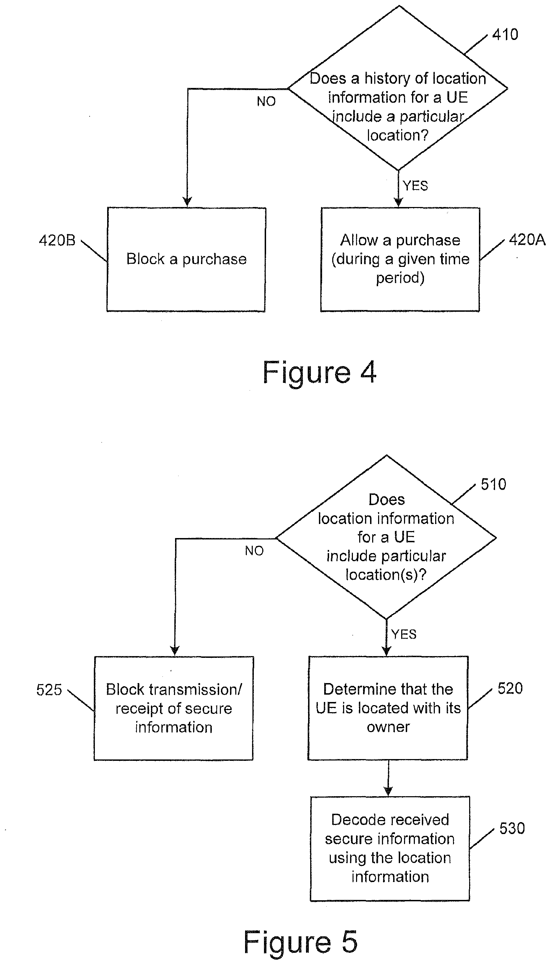

Referring now to Figure 4, in a further example of various embodiments of the present inventive concepts, a relatively simple operation of purchasing an item using the UE 101 (e.g., using a digital wallet via the UE 101) is provided. If a user (e.g., owner) of the UE 101 has been at home and then wants to buy groceries at a grocery store, this purchase can be allowed (e.g., enabled)(Block 420A) by using a history of location information (which includes the previous location of the UE 101 at the home)(Block 410). For example, the user may be able to complete the purchase by lending the UE 101 to another person (e.g., a housekeeper), without sharing password information (or financial information) with the other person. Specifically, the user may lend the UE 101 to the other person, who can then go to the grocery store and purchase (Block 420A) items using the UE 101, because of authorization/verification provided based on the previous location of the UE 101 at the user's home. On the other hand, the purchase may be blocked (420B) if the UE 101 has not previously been at the user's home (or work, or another expected/historical location). Moreover, such use of the UE 101 to complete a financial transaction by a person other than the user may be limited to a given time period (e.g., thirty minutes, an hour, several hours, or more).

Referring now to Figure 5, in yet another example of various embodiments of the present inventive concepts, a user's current location and/or a history of the user's previous locations may be used to verify the user's identity and/or enable one or more particular actions. The user's current location and/or history of previous locations may be referred to as Location Information (LI). For example, if (Block 510) the UE 101 has been at the location of the user's (e.g., owner's) home overnight, and is at the location of his/her workplace during the day, a reasonable assumption (Block 520) can be made that the UE 101 is located with that person. Accordingly, secure information may be sent to that person by encrypting the information based on the keys that are based on the LI (Block 530), which may be known to a secure server and/or the UE 101. On the other hand, if the UE 101 has not been at the user's home and/or workplace, then transmission/receipt of secure information may be blocked (Block 525). Moreover, even if the secure information is intercepted by a third party, it may be protected because it may only be decoded (Block 530) if the third party has knowledge of the LI.

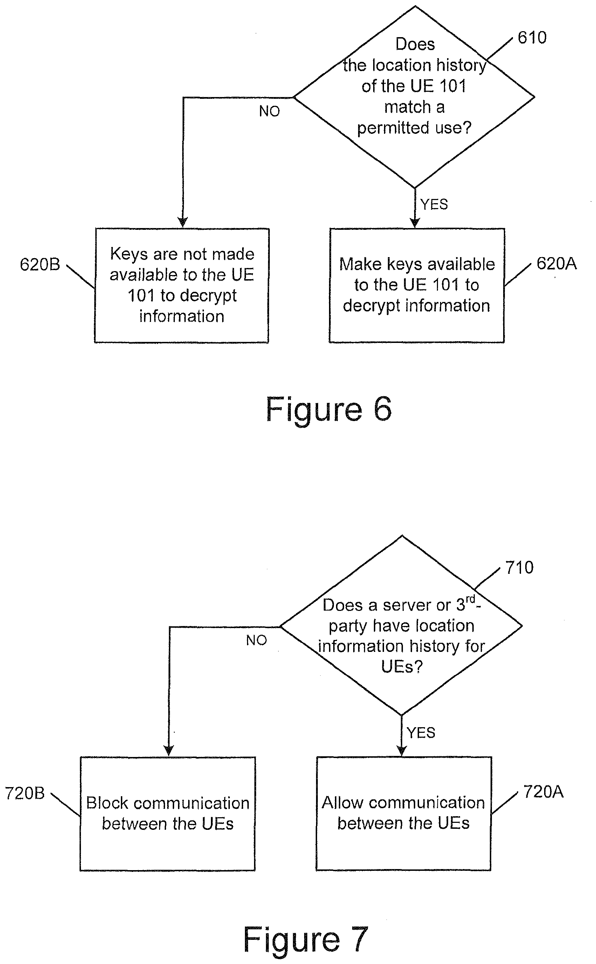

Referring now to Figure 6, in a further example, the keys (i.e., the actual keys themselves) may be based on (e.g., conditioned upon) location history. For example, if (Block 610) the location history of the UE 101 does not match with a permitted use (e.g., permitted locations), then the keys may not be available (Block 620B) to the UE 101 to decrypt information. On the other hand, if (Block 610) the location history of the UE 101 matches with a permitted use, then the keys may be available (Block 620A) to the UE 101 to decrypt information.

Referring now to Figure 7, according to various embodiments of the present inventive concepts, a plurality of UEs 101 may have an action (e.g., a communication) enabled/disabled by a third party with LI history of the UEs 101. For example, two or more UE 101 owners may want to share (Block 720A) information (or otherwise communicate with each other). Such a communication may be mediated/initiated by a secure server that has LI history of the UEs 101, or by a third party with LI history of the UEs 101. On the other hand, the communication may be prevented (Block 720B) if (Block 710) the secure server or third party does not have the LI history.

Moreover, any message or financial transaction illustrated in any of Figures 2-7 may be blocked due to incomplete location history data. For example, if location information history is not available, any message or financial transaction may be blocked due to insufficient knowledge to make a decision. Because decisions illustrated in Figures 2-7 may be based on location over time, a lack of that data may yield a negative state. For example, in Figure 3B, if a location database is incomplete, a rational decision based upon past history may be difficult/impossible. Accordingly, as one example, a purchase may be blocked (Block 320A') if insufficient data is available to determine whether a UE 101 is (or previously has been) at a particular location.

A variety of different embodiments of the present inventive concepts have been disclosed herein, in connection with the above description and the drawings. It will be understood that it would be unduly repetitious and obfuscating to literally describe and illustrate every combination and subcombination of these embodiments. Accordingly, the present specification, including the drawings, shall be construed to constitute a complete written description of all combinations and subcombinations of the embodiments of the present inventive concepts described herein, and of the manner and process of making and using them, and shall support claims to any such combination or subcombination.

In the drawings and specification, there have been disclosed example embodiments of the present inventive concepts. Although specific terms are employed, they are used in a generic and descriptive sense only and not for purposes of limitation, the scope of the present inventive concepts being defined by the following claims.

## Claims

1. A method for enabling or disabling an electronic message that has been transmitted to a wireless user device (101), the method comprising, at the wireless user device (101):
enabling or disabling access to the electronic message that has been transmitted to the wireless user device (101), in response to whether a current or previous physical location of the wireless user device (101) corresponds to a permitted location, **characterised in that** the electronic message is encrypted based on keys that are based on location information, wherein the location information comprises the current physical location and/or a history of previous locations.

2. The method of Claim 1, wherein enabling or disabling access to the electronic message comprises enabling access to the electronic message in response to determining that the current or previous physical location of the wireless user device (101) corresponds to the permitted location.

3. The method of claim 1 comprising:
accessing a history of previous physical locations of the wireless user device (101); and
enabling or disabling the electronic message in response to whether the history of previous physical locations of the wireless user device (101) indicates that the wireless user device has been at a specified location.

4. The method of Claim 1, wherein enabling or disabling the electronic message comprises enabling the electronic message, in response to determining on a particular day that the wireless user device (101) was at a home of a user of the wireless user device overnight and has been at a business location of the user of the wireless device on the particular day.

## Patentansprüche

1. Ein Verfahren zur Aktivierung oder Deaktivierung einer elektronischen Mitteilung, die an eine drahtlose Benutzervorrichtung (101) gesendet wurde, wobei das Verfahren Folgendes umfasst, an der drahtlosen Benutzervorrichtung (101):
Aktivieren oder Deaktivieren des Zugriffs auf die elektronische Mitteilung, die an die drahtlose Benutzervorrichtung (101) übertragen wurde, in Antwort darauf, ob ein aktueller oder vorheriger Standort der drahtlosen Benutzervorrichtung (101) einem zugelassenen Standort entspricht, **dadurch gekennzeichnet, dass** die elektronische Mitteilung basierend auf Schlüsseln verschlüsselt ist, die auf Standortinformationen basieren, wobei die Standortinformationen den aktuellen physischen Standort und/oder eine Historie vorheriger Standorte umfassen.

2. Das Verfahren nach Anspruch 1, wobei die Aktivierung oder Deaktivierung des Zugriffs auf die elektronische Mitteilung umfasst, dass der Zugriff auf die elektronische Mitteilung in Antwort darauf aktiviert wird, dass bestimmt wird, dass der aktuelle oder vorherige physische Standort der drahtlosen Benutzervorrichtung (101) dem zugelassenen Standort entspricht.

3. Das Verfahren nach Anspruch 1, umfassend:
Zugreifen auf eine Historie vorheriger physischer Standorte der drahtlosen Benutzervorrichtung (101); und
Aktivieren oder Deaktivieren der elektronischen Mitteilung in Antwort darauf, ob die Historie der vorherigen physischen Standorte der drahtlosen Benutzervorrichtung (101) angibt, dass sich die drahtlose Benutzervorrichtung an einem festgelegten Standort befand.

4. Das Verfahren nach Anspruch 1, wobei die Aktivierung oder Deaktivierung der elektronischen Mitteilung umfasst, dass die elektronische Mitteilung in Antwort darauf aktiviert wird, dass zu einem bestimmten Tag bestimmt wird, dass sich die drahtlose Benutzervorrichtung (101) über Nacht an einem Heimstandort eines Benutzers der drahtlosen Benutzervorrichtung befand und dass sie sich an dem bestimmten Tag an einem Geschäftsstandort des Benutzers der drahtlosen Vorrichtung befand.

## Revendications

1. Un procédé d'activation ou de désactivation d'un message électronique qui a été transmis à un dispositif d'utilisateur sans fil (101), le procédé comprenant, au niveau du dispositif d'utilisateur sans fil (101) :
l'activation ou la désactivation d'un accès au message électronique qui a été transmis au dispositif d'utilisateur sans fil (101) selon qu'un emplacement physique antérieur ou actuel du dispositif d'utilisateur sans fil (101) correspond à un emplacement autorisé, **caractérisé en ce que** le message électronique est chiffré en fonction de clés qui sont basées sur des informations d'emplacement, où les informations d'emplacement comprennent l'emplacement physique actuel et/ou un historique d'emplacements antérieurs.

2. Le procédé selon la Revendication 1, où l'activation ou la désactivation d'un accès au message électronique comprend l'activation d'un accès au message électronique en réponse à la détermination que l'emplacement physique antérieur ou actuel du dispositif d'utilisateur sans fil (101) correspond à l'emplacement autorisé.

3. Le procédé selon la Revendication 1 comprenant :
l'accès à un historique d'emplacements physiques antérieurs du dispositif d'utilisateur sans fil (101), et
l'activation ou la désactivation du message électronique selon que l'historique d'emplacements physiques antérieurs du dispositif d'utilisateur sans fil (101) indique que le dispositif d'utilisateur sans fil s'est trouvé à un emplacement spécifié.

4. Le procédé selon la Revendication 1, où l'activation ou la désactivation du message électronique comprend l'activation du message électronique en réponse à la détermination, un jour particulier, que le dispositif d'utilisateur sans fil (101) s'est trouvé à un domicile d'un utilisateur du dispositif d'utilisateur sans fil pendant la nuit et s'est trouvé à un emplacement professionnel de l'utilisateur du dispositif sans fil le jour particulier.
